# FASCICULE DE BREVET EUROPEEN

(11) **EP 3 953 104 B1**
(45) Date de publication et mention de la délivrance du brevet: **11.03.2026**
(21) Numéro de dépôt: 20711194.9
(22) Date de dépôt: 19.03.2020
(51) Int. Cl.: B24B 19/26, B24B 49/00

(54) **PROCÉDÉ D'ABRASION**
SCHLEIFVERFAHREN
ABRASION METHOD

(30) Priorité: 11.04.2019 FR 1903884
(43) Date de publication de la demande: 16.02.2022
(73) Titulaire: Gebe2 Productique, 85600 Saint-Hilaire-de-Loulay (FR)
(72) Inventeur: DE ROO, Nicolas, 85600 Montaigu (FR)
(74) Mandataire: Ipsilon
(86) Numéro de dépôt international: PCT/EP2020/057653
(87) Numéro de publication internationale: WO 2020/207749

(56) Documents cités:
- DE-B3- 102015 119 240
- US-A1- 2002 072 297

## Description

### Domaine technique

La présente invention concerne un procédé d'abrasion, notamment de ponçage de pièces, par exemple métalliques et/ou en matériaux composites, notamment de pièces destinées à la construction aéronautique, automobile, navale, éolienne ou autre industrie.

### Technique antérieure

Les procédés d'abrasion comportent notamment le ponçage, le polissage et le meulage, le sablage et le jet d'eau.

Lors de la fabrication d'une pièce industrielle, celle-ci comporte plusieurs couches de matériaux de base, de préparation et de finition, toutes ces couches pouvant elles-mêmes être constituées de plusieurs sous-couches.

Les couches de préparation ont pour mission d'assurer l'atténuation de défauts à différentes échelles : micro et macro-géométriques. Pour les défauts micro-géométriques, on utilisera usuellement des matériaux d'apprêt dits « bouche-pores » et pour les défauts macro-géométriques, on utilisera plutôt des mastics, les uns et les autres étant déposés en couches. Ces deux types de couches seront déposés les uns sur les autres, notamment pour combler les défauts apparents sur la pièce.

Avant de déposer une couche de finition, par exemple de peinture, on procède généralement à une phase d'abrasion, notamment de ponçage, pour permettre d'avoir une surface régulière avec le moins de matière possible. En effet et en particulier pour le secteur aéronautique, la masse totale d'une pièce doit être la plus faible possible pour des raisons d'économie d'énergie lors de son utilisation. Il s'agit donc de poncer l'excédent de matière tout en conservant les performances structurales et fonctionnelles de la pièce. A titre d'exemple, par structural, on peut entendre la tenue mécanique de la pièce et par fonctionnel sa performance aérodynamique. L'objectif du ponçage est donc triple, permettant à la fois de préparer la surface et de retirer de la matière sans en retirer trop.

Il est à noter que certaines pièces comportent des sous-couches qu'il est interdit de toucher. On peut citer entre autres, en aéronautique, la couche de grillage foudre qui assure une résistance de la pièce aux impacts de la foudre.

Il n'existe pas aujourd'hui de manière automatisée de maîtriser précisément l'enlèvement de matière par abrasion, notamment par ponçage, sans risque de dégradation de la pièce parachevée.

Le ponçage est généralement effectué manuellement. Ceci permet de maîtriser dans une certaine mesure l'enlèvement de matière mais de manière insuffisante en vue d'automatiser le procédé. Lors d'une opération manuelle, il est également très difficile d'obtenir une surface régulière. Enfin, il n'y a pas réellement de répétabilité, malgré l'expérience des opérateurs et chaque pièce présente des défauts différents.

Il est donc difficile à l'heure actuelle d'automatiser ce procédé. Cependant, cette automatisation est absolument nécessaire au regard de la faible valeur ajoutée apportée par cette opération. Pour pouvoir opérer cette transformation, il est nécessaire d'avoir une meilleure maîtrise de la matière enlevée et restante sur la pièce pour atteindre cet objectif.

US 2002/072297 A1 présente un dispositif et un procédé automatique de finition de surface, notamment de panneau d'avion, en vue de corriger les anomalies de surface. Le dispositif comporte ainsi un contrôleur, une pluralité de moyens de scan et des outils de finition de surface, qui permettent de détecter et traiter les anomalies de surface.

DE 10 2015 119 240 B3 présente un procédé automatique de détection de défauts sur la surface d'une pièce. Le procédé permet de localiser et de catégoriser en fonction de leur topographie les défauts de la surface de la pièce. Le document présente encore un procédé de traitement par un robot des défauts détectés.

Il n'existe pas actuellement de solution permettant de maîtriser, de manière sûre, rapide et relativement peu coûteuse, la préparation de surface d'une pièce, multicouche ou monocouche, notamment métallique, par enlèvement de matière au moyen de procédés abrasifs tels que, par exemple, le meulage, le ponçage, le polissage, le sablage et le jet d'eau.

L'invention vise donc à répondre à ce besoin.

### Exposé de l'invention

La présente invention a ainsi pour objet un procédé d'abrasion selon la revendication 1.

Le procédé peut comporter au moins une répétition des étapes (a) à (c) et éventuellement au moins une répétition de l'étape (d).

Le procédé peut en particulier comporter plusieurs répétitions des étapes (a) à (d), de préférence au moins deux répétitions, par exemple cinq répétitions, la dernière répétition ne comportant pas l'étape (d).

Grâce à l'invention, on peut obtenir des informations portant sur la surface de la pièce, ce qui permet d'ajuster l'abrasion, notamment le ou les paramètres d'abrasion et la trajectoire suivie. On peut notamment, grâce à ce procédé, plutôt que de suivre la matière enlevée de la pièce par abrasion, suivre, analyser, étudier la matière restante sur la pièce.

Par « surface de la pièce », on entend la partie de la surface de la pièce qui est à abraser. Cette partie de la surface à abraser peut correspondre à la totalité de la surface de la pièce ou seulement à une portion de celle-ci. Dans ce dernier cas, une partie de la totalité de la surface est à abraser.

Dans un mode de réalisation, la machine d'abrasion se déplace relativement à la pièce lors de l'étape (d) d'abrasion, la pièce étant alors de préférence fixe. Dans un autre mode de réalisation, la pièce est déplacée relativement à la machine d'abrasion lors de l'étape (d) d'abrasion, la machine d'abrasion étant alors de préférence fixe. Dans un autre mode de réalisation, la pièce et la machine d'abrasion sont mobiles l'une par rapport à l'autre, lors de l'étape (d) d'abrasion.

La machine d'abrasion peut être programmée avec des paramètres initiaux d'abrasion et une trajection initiale d'abrasion prédéterminés. Lors de l'étape (c) du procédé d'abrasion, un ou plusieurs de ces paramètres et/ou la trajectoire d'abrasion sont déterminés, étant par exemple conservés avec leurs caractéristiques initiales ou ajustés. La trajectoire d'abrasion peut ainsi être prédéterminée, en particulier la trajectoire initiale d'abrasion, l'étape (c) consistant alors, le cas échéant, à l'ajuster si nécessaire.

Le procédé comporte par exemple après l'étape (c) le paramétrage de la machine d'abrasion avec ledit au moins un paramètre d'abrasion et/ou la trajectoire d'abrasion.

Ledit au moins un paramètre d'abrasion peut être variable ou non au cours de la trajectoire d'abrasion réalisée à l'étape (d), notamment en fonction des valeurs attribuées pour les zones élémentaires ou ensembles de zones élémentaires.

Ladite au moins une caractéristique de la pièce est de préférence choisie dans le groupe constitué par une couleur, une dimension, notamment une épaisseur, un état de surface tel qu'une brillance ou une rugosité, une radiation, de préférence la couleur.

Lorsque la ou une caractéristique consiste en la couleur, on peut par exemple détecter les changements de couleur de la surface.

Ladite au moins une caractéristique de la pièce peut être une caractéristique de la surface de la pièce. Lorsque le procédé comporte l'étape consistant à acquérir des données relatives à au moins deux caractéristiques de la pièce, au moins l'une de ces caractéristiques peut être une caractéristique relative à la surface de la pièce, par exemple la couleur ou l'état de surface.

Ledit au moins un capteur est notamment choisi dans le groupe constitué par un capteur avec ou sans contact à partir de technologies optiques, mécaniques, magnétiques, capacitives, acoustiques, de rayonnements et piézo-électriques. Ledit au moins un capteur peut être choisi dans le groupe constitué par, entre autres, les caméras, les capteurs de couleurs, les thermocouples.

Le capteur permet d'acquérir des données relatives à la caractéristique.

Ledit au moins un paramètre d'abrasion peut être choisi parmi les suivants : vitesse d'avance, vitesse de rotation ou défilement de l'outil abrasif, effort appliqué de l'outil abrasif sur la surface de la pièce, nature, forme et/ou taille de l'outil abrasif, orientation angulaire de l'outil abrasif par rapport à la normale locale de la surface de la pièce

En réalisant l'étape de traitement des données acquises, on peut en déduire l'ajustement d'un ou de plusieurs paramètres par exemple parmi ceux indiqués ci-dessus, et également celui de la trajectoire d'abrasion de la machine et/ou de la pièce, relativement.

L'étape (c) de détermination peut comporter une comparaison, pour chaque zone élémentaire, de ladite valeur attribuée avec une valeur seuil prédéterminée.

Lorsque, par mise en œuvre de la comparaison, la valeur seuil pour ladite au moins une caractéristique de la pièce est atteinte dans au moins une zone élémentaire d'un ensemble de zones élémentaires, la trajectoire d'abrasion est avantageusement déterminée de manière à ce qu'il n'y ait plus d'abrasion dans l'ensemble de zones élémentaires concerné.

Lorsque, par mise en œuvre de la comparaison, la valeur seuil pour ladite au moins une caractéristique de la pièce est atteinte pour au moins un pourcentage prédéfini de la surface, de zones élémentaires ou d'ensemble(s) de zones élémentaires, notamment au moins 80% de la surface, voire supérieur à 80%, ce pourcentage pouvant aller jusqu'à 100%, le procédé d'abrasion est stoppé. Il est à noter que pour atteindre ladite valeur seuil pour plus de 80% de la surface de la pièce, il peut être nécessaire de changer tout ou partie de l'outil abrasif, notamment changer de papier abrasif, de plateau abrasif et/ou d'outil abrasif.

L'abrasion consiste avantageusement en un ponçage. Elle peut en variante ou partiellement consister en un polissage ou un meulage voire tout autre procédé d'abrasion. La machine d'abrasion comporte un effecteur avec un outil d'abrasion comportant un plateau abrasif supportant éventuellement un papier abrasif. L'outil d'abrasion et/ou l'effecteur et/ou le plateau et/ou le papier peut être adapté si besoin.

La surface de la pièce peut comporter une portion périphérique à proximité d'au moins un bord de la pièce sur une distance prédéterminée à partir de celui-ci, ladite portion périphérique pouvant ne pas être traitée par la machine d'abrasion ou pouvant être traitée au moins partiellement avec la machine d'abrasion dont on a changé une partie, notamment dont un plateau abrasif de la machine d'abrasion présente un diamètre inférieur, de manière automatique ou manuelle.

La pièce est avantageusement une pièce avec une surface plane ou courbe avec par exemple un rayon de courbure compris entre 3 et 5m. La pièce traitée par le procédé selon l'invention est par exemple relativement plus grande que la taille de l'outil abrasif.

Le procédé peut mettre en œuvre deux capteurs, notamment de même type ou différents, pour la réalisation de l'étape (a) d'acquisition. Dans le cas où deux capteurs sont différents, cela peut permettre d'acquérir des données relatives à deux caractéristiques différentes, par exemple la couleur et l'épaisseur. Dans le cas où les capteurs sont de même type, chacun d'eux peut détecter une donnée de la caractéristique, par exemple une unique couleur, l'ensemble des données des capteurs permettant d'attribuer une valeur à la caractéristique, par exemple la couleur de la zone élémentaire concernée. C'est alors le traitement de l'ensemble des données acquises qui permet d'attribuer une valeur à la caractéristique pour une zone élémentaire particulière.

Dans un mode de réalisation particulier, le ou les capteurs peuvent comporter un capteur de détection de couleur et la valeur attribuée à chaque zone élémentaire consiste en une couleur. Dans ce cas, la valeur seuil peut alors consister en un changement de couleur prédéterminé. Il est à noter qu'il peut y avoir un ou plusieurs changements de couleur avant d'atteindre le changement de couleur formant valeur seuil.

On peut réaliser une cartographie de la surface comportant une pluralité desdites zones élémentaires.

Les zones élémentaires peuvent être de forme et/ou de superficie identiques entre elles. En variante, deux zones élémentaires peuvent être différentes l'une de l'autre de par leur forme et/ou leur superficie.

Un ensemble de zones élémentaires est défini comme comportant une pluralité de zones élémentaires présentes dans un rayon prédéterminé autour d'un point donné de la surface de la pièce, le rayon prédéterminé correspondant à celui d'un plateau abrasif de la machine d'abrasion. Ainsi, pour chaque point donné d'une trajectoire d'abrasion initiale, on définit un ensemble de zones élémentaires autour de ce point, dont la surface correspond par exemple à celle du plateau abrasif.

Ainsi, on peut effectuer le traitement des données acquises sur chacune des zones élémentaires et/ou pour chaque ensemble de zones élémentaires, pour pouvoir déterminer et/ou ajuster le ou les paramètre(s) de la machine d'abrasion et/ou la trajectoire d'abrasion lors de la mise en œuvre de l'abrasion.

### L'étape d'acquisition

L'acquisition à l'étape (a), qui peut correspondre à une phase de mesure, peut être réalisée par un balayage d'au moins une partie de la surface de la pièce, par exemple selon une trajectoire prédéfinie. La trajectoire de balayage est par exemple formée de points espacés régulièrement, par exemple distants entre eux de 50 mm. Le balayage est avantageusement réalisé de manière continue sur l'ensemble de la trajectoire, par exemple à une vitesse d'environ 500 mm.s^{-1,} maximisée selon la fréquence d'acquisition et l'effet de flou. Le déclenchement d'une prise de mesure par le ou les capteurs peut être réalisé lors du balayage à chaque point rencontré ou indépendamment des points rencontrés, de préférence à intervalles réguliers. L'espace entre deux prises de mesure dépend bien entendu de la résolution recherchée. Cet espace peut être inférieur à deux fois le diamètre de l'outil abrasif. En variante ou de manière additionnelle, un déclenchement d'une prise de mesure par le ou les capteurs peut être réalisé à intervalles de temps et/ou de distance, réguliers ou non, sur l'ensemble de la surface à balayer.

Chacune de ces prises de mesure peut correspondre ou non à une zone élémentaire. Lorsque plusieurs prises de mesure correspondent à une zone élémentaire, au moins un critère, par exemple de moyenne ou de hiérarchie, peut être défini pour attribuer une valeur à la zone élémentaire. Lorsqu'une prise de mesure est effectuée pour une zone élémentaire, la valeur attribuée à cette zone peut correspondre directement à la donnée relevée dans la zone élémentaire. Une prise de mesure peut, en variante, être effectuée pour plusieurs zones élémentaires, simultanément, par exemple quatre zones élémentaires, le champ de vision du capteur couvrant plusieurs zones élémentaires simultanément. On peut alors attribuer une valeur pour chaque zone élémentaire et/ou pour l'ensemble des zones élémentaires pour lesquelles la prise de mesure a été effectuée.

L'acquisition peut être effectuée dans un environnement sans lumière, hormis éventuellement une lampe éclairant à un instant t la partie de la surface sur laquelle est effectuée l'acquisition par le ou les capteurs à cet instant t. Une telle lampe peut être intégrée au capteur ou à l'outil supportant le capteur. Cela permet d'avoir une image de luminosité homogène et constante sur toute la surface de la pièce.

En variante, l'acquisition est effectuée dans un environnement avec lumière.

Dans un mode de réalisation particulier, on utilise un capteur de détection de couleur couplé à un capteur d'épaisseur.

Dans un mode de réalisation particulier, on ne réalise pas de mesure de l'épaisseur de revêtement, notamment de peinture.

### L'étape de traitement

Le traitement à l'étape (b), qui peut correspondre à une phase de calcul, peut permettre d'attribuer une valeur à chaque ensemble de zones élémentaires. Chaque ensemble de zones élémentaires a une surface correspondant à une surface du plateau abrasif de la machine d'abrasion, notamment la ponceuse, qui permettra ultérieurement de réaliser l'abrasion, notamment le ponçage, autour d'un point donné de la trajectoire d'abrasion. En effet, la surface instantanée d'abrasion correspond à la surface du plateau et cette surface peut englober une ou plusieurs zones élémentaires, correspondant à un ensemble de zones élémentaires. Ainsi, la phase de traitement peut permettre d' attribuer une valeur à chaque ensemble de zones élémentaires, de préférence, une valeur à chaque zone élémentaire puis une valeur à chaque ensemble de zones élémentaires déterminée à partir des valeurs des zones élémentaires de l'ensemble de zones élémentaires.

En particulier, à partir des données acquises par le ou les capteurs, on peut tout d'abord attribuer une valeur à chaque zone élémentaire, puis attribuer une valeur à chaque ensemble de zones élémentaires pour un point donné de la trajectoire d'abrasion, cette valeur de l'ensemble étant fonction de la valeur de chaque zone élémentaire de l'ensemble. La valeur de l'ensemble peut par exemple correspondre à une moyenne, qui peut être pondérée, des valeurs de la zone élémentaire et/ou à une valeur prépondérante d'une zone élémentaire de l'ensemble et/ou un autre critère. Par exemple, si une valeur d'une zone élémentaire de l'ensemble a atteint la valeur seuil, on peut alors attribuer la valeur seuil à cet ensemble.

### L'étape de détermination et/ou d'ajustement du ou des paramètres d'abrasion et de la trajectoire d'abrasion

Dans cette étape, il s'agit de déterminer le ou les paramètres et la trajectoire d'abrasion de la machine d'abrasion en fonction des valeurs attribuées à l'étape précédente. En particulier, on peut définir la trajectoire à emprunter lors de l'abrasion par le plateau abrasif pour ne pas réaliser d'abrasion dans la ou les zones élémentaires ou ensemble(s) de zones élémentaires à exclure car ayant atteint une valeur seuil prédéterminée. On peut ajuster un paramètre tel que la vitesse d'avance, cette vitesse pouvant être augmentée localement pour réduire l'abrasion d'un ensemble de zones par exemple ou sur toute la trajectoire.

Des paramètres d'abrasion initiaux peuvent être prédéfinis.

La trajectoire d'abrasion peut comporter plusieurs tronçons discrets de trajectoire ou une unique trajectoire continue. Entre les éventuels tronçons, la machine d'abrasion pourra cesser l'abrasion et/ou s'écarter de la surface jusqu'au tronçon suivant notamment dans des zones élémentaires à exclure de l'abrasion.

La trajectoire initiale, par exemple prédéterminée, est avantageusement continue. La trajectoire ajustée, notamment après une première, deuxième ou troisième abrasion, peut être discontinue pour exclure certaines zones, et permet néanmoins de traiter l'ensemble de la surface de la pièce qui doit être traitée par abrasion. Une trajectoire peut être définie pour ne traiter que les zones à traiter. La trajectoire initiale peut être conçue pour avoir une abrasion la plus uniforme possible. Les paramètres initiaux d'abrasion peuvent comporter une vitesse d'avance minimale.

Tout ou partie des paramètres d'abrasion peuvent être ajustés pour toute la trajectoire, étant alors non variables sur cette trajectoire. En variante, tout ou partie des paramètres d'abrasion peuvent être variables le long de la trajectoire, notamment en fonction des valeurs attribuées pour les zones élémentaires et/ou ensembles de zones élémentaires rencontrés sur la trajectoire.

Des paramètres, autres que ceux mentionnés plus haut, peuvent être modifiés, comme un changement de disque pour un disque neuf et/ou pour un grain d'abrasion différent, notamment allant vers une abrasion moindre au fur et à mesure des abrasions réalisées pour réduire l'enlèvement de matière.

Un autre paramètre à ajuster peut être l'effort d'abrasion ou encore la vitesse de rotation.

Lorsque la machine d'abrasion comporte une compliance, l'effort de commande de la compliance peut être ajusté.

On peut encore, comme paramètre, modifier le diamètre du plateau abrasif, par exemple pour un plateau ayant une surface dont le diamètre est différent, notamment plus petit au fur et à mesure des abrasions réalisées pour réduire la surface d'enlèvement de matière à un instant donné. Le traitement des données sera alors avantageusement adapté à ce nouveau diamètre, notamment pour les zones élémentaires formant un ensemble autour d'un point donné.

### Outil d'acquisition et machine d'abrasion

L'outil d'acquisition permettant de mettre en œuvre l'étape (a) d'acquisition peut être distinct, ou non, de la machine d'abrasion utilisée pour réaliser l'étape d'abrasion.

En particulier, un même robot peut porter l'outil d'acquisition et la machine d'abrasion. Le robot peut comporter l'outil de traitement et de calcul pour la mise en œuvre des étapes (b) et (c). Le robot peut être apte à mettre en œuvre l'ensemble des étapes du procédé.

L'outil d'acquisition peut comporter un capteur porté par un bras robotisé, notamment multiaxe.

La machine d'abrasion peut comporter un effecteur portant un outil d'abrasion portant le plateau abrasif, notamment un outil de ponçage, et éventuellement une compliance. Le plateau abrasif est avantageusement rotatif, avec ou sans excentrique, étant commandé en rotation par l'outil d'abrasion ou, de préférence, étant à rotation libre. Le plateau peut être rigide ou souple, par exemple additionné d'une mousse.

### Brève description des dessins

L'invention sera mieux comprise à la lecture de la description qui va suivre de modes de réalisation non limitatifs de celle-ci, et à l'examen du dessin annexé, sur lequel :
[Fig 1] représente, en schéma blocs, les différentes étapes d'un procédé selon l'invention,
[Fig 2] représente schématiquement, en perspective, un exemple de mise en œuvre de l'étape d'acquisition du procédé selon l'invention,
[Fig 3] représente de manière schématique un exemple de résultat de l'étape de traitement du procédé selon l'invention pour certaines zones élémentaires,
[Fig 4] représente schématiquement un exemple de cartographie pouvant être établie lors du traitement des données en vue de l'étape de paramétrage du procédé selon l'invention,
[Fig 5] représente schématiquement, en perspective, un exemple de mise en œuvre de l'étape d'abrasion du procédé selon l'invention,
[Fig 6] représente un exemple de cartographie de la surface de la pièce après mise en œuvre de l'étape de traitement,
[Fig 7] représente la cartographie de la figure 6 dans laquelle on a exclu certaines zones d'une abrasion ultérieure,
[Fig 8] représente la cartographie de la figure 7 dans laquelle au moins une partie de la trajectoire de la machine d'abrasion a été tracée,
[Fig 9] représente en perspective, schématiquement, la surface d'une pièce à abraser à l'aide du procédé selon l'invention,
[Fig 10] représente une cartographie de la surface de la pièce de la figure 9 avant abrasion,
[Fig 11] représente la cartographie de la surface de la pièce de la figure 9 après trois répétitions des étapes du procédé selon l'invention,
[Fig 12] représente en perspective, schématiquement, la surface de la pièce de la figure 9 après trois répétitions des étapes du procédé selon l'invention, et
[Fig 13] représente la cartographie de la surface après traitement des données aux fins de paramétrage de la trajectoire d'abrasion.

### Description détaillée

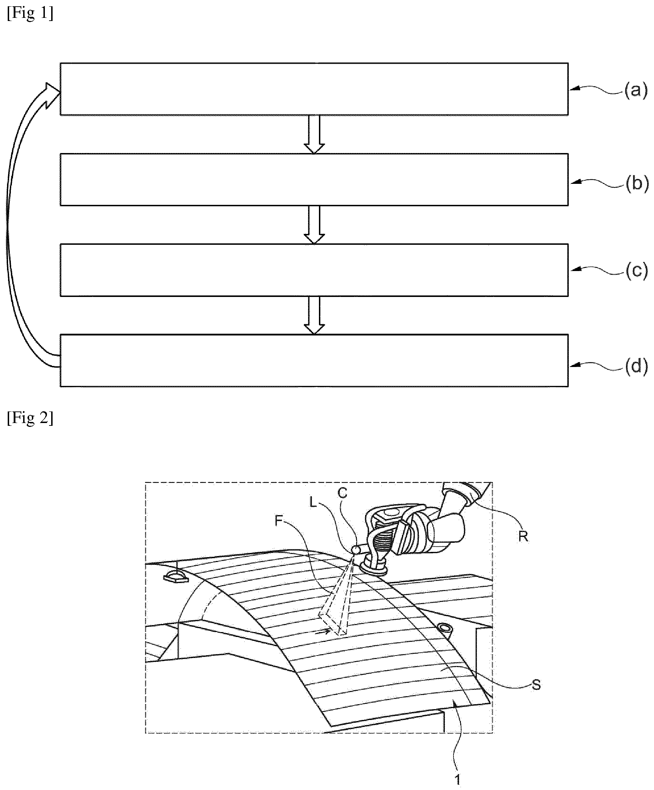

La figure 1 représente un exemple de procédé d'abrasion d'une pièce selon l'invention comportant différentes étapes. Dans une étape (a), on réalise une acquisition, avec au moins un capteur, sur au moins une partie de la surface de la pièce, de données relatives à au moins une caractéristique de la pièce, en au moins deux zones élémentaires définies sur ladite surface d'acquisition.

Dans une deuxième étape (b), on traite, pour chaque zone élémentaire, des données relatives à ladite au moins une caractéristique afin d'attribuer à au moins un ensemble de zones élémentaires une valeur pour cette caractéristique. Une étape suivante (c) consiste à déterminer et/ou ajuster au moins un paramètre d'abrasion de la machine d'abrasion et/ou une trajectoire d'abrasion en fonction des valeurs attribuées pour les ensemble(s) de zones élémentaires.

Enfin, à l'étape (d), on réalise l'abrasion d'au moins une partie de la surface avec la machine d'abrasion avec ledit au moins un paramètre d'abrasion et ladite trajectoire d'abrasion. Une trajectoire initiale et un ou des paramètres d'abrasion peuvent être prédéterminés pour obtenir une abrasion la plus uniforme possible. Ils peuvent être mis en œuvre pour le premier passage d'abrasion. De préférence, on répète au moins une à deux fois ces étapes, comme signalé par la flèche qui remonte de l'étape (d) à l'étape (a), hormis éventuellement l'étape (d) si l'on considère, après l'étape (b) et/ou (c), qu'il n'y a plus lieu de réaliser l'abrasion car la pièce est suffisamment abrasée.

Chacune de ces étapes du procédé selon l'invention va être maintenant détaillée.

On a illustré à la figure 2 l'étape d'acquisition (a) du procédé selon l'invention. Dans cette étape, un robot R comportant un contrôleur et muni d'un capteur C intégrant une lampe L, réalise un balayage en zigzag de la surface S d'une pièce 1, afin d'acquérir des données relatives à une caractéristique de la surface S de la pièce. Le faisceau F schématise le champ de vision du capteur C.

Dans l'exemple illustré, le capteur C est un capteur de détection de couleur. La pièce est composée d'une couche métallique, finale, couleur bronze, d'une couche intermédiaire blanche et d'une couche initiale jaune, qui est la seule visible avant l'abrasion. L'objectif du procédé d'abrasion est d'obtenir une surface régulière avec le moins de matière possible sans toutefois entamer la couche métallique.

La caractéristique sur laquelle des données sont acquises et traitées est la couleur de la surface de la pièce, dans cet exemple, en vue de détecter des changements de couleur qui permettent de déduire des informations sur le niveau d'abrasion requis.

La pièce 1 est sensiblement rectangulaire, étant incurvée, comme visible sur la figure 2, dans cet exemple. Elle peut être de toute forme et dimensions sans sortir du cadre de l'invention, étant avantageusement dépourvue de relief sur la surface à traiter.

Au cours de l'étape d'acquisition, l'ensemble de la surface S est balayé par le robot pour permettre l'acquisition de données. La trajectoire d'acquisition est formée virtuellement de points espacés régulièrement afin de positionner les déclenchements des mesures, notamment de couleur, de façon à ce que l'intégralité de la pièce soit capturée.

La prise de mesures par le capteur C peut être déclenchée à intervalles de distance et/ou de temps prédéterminés, dans cet exemple tous les 50mm et/ou toutes les 10ms.

La vitesse de balayage peut être de 500 mm.s⁻¹ par exemple.

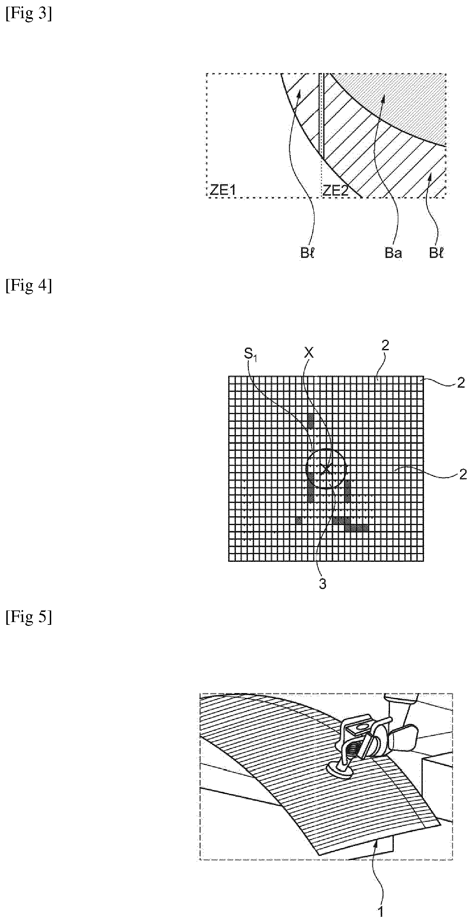

Le résultat de certaines de ces mesures est illustré sur la figure 3. Dans l'exemple considéré, la fenêtre de mesure du capteur est divisée en deux zones élémentaires. Le capteur permet de détecter la couleur finale bronze et la couleur intermédiaire blanche avec des filtres appelés « OUT » et appliqués sur chaque zone élémentaire. La couleur initiale, jaune, correspond à l'absence des deux autres.

Pour chaque zone élémentaire, un traitement, lors de l'étape (b), est effectué et une seule couleur, correspondant à une valeur de la zone élémentaire, est déterminée, et enregistrée, par le contrôleur suivant une hiérarchie prédéfinie, par exemple bronze supérieur à blanc supérieur à jaune. Comme visible sur la figure 3, on détecte sur la zone élémentaire ZE1 la présence de la couleur blanche B1 et l'absence de couleur bronze. Cela permet d'attribuer la valeur blanche à la zone élémentaire ZE1. Pour ce qui concerne la zone élémentaire ZE2, on détecte la couleur bronze Br et la couleur blanche Bl de telle sorte que l'on attribue par hiérarchie la valeur bronze à la zone élémentaire ZE2.

Il est aussi possible, lors de l'étape de traitement (b), pour l'attribution d'une valeur à une zone de traitement, d'ajuster des seuils de détection afin d'ignorer une couleur pour une zone élémentaire quand elle est présente mais en trop faible quantité pour que cela nécessite d'adapter l'abrasion, notamment le ponçage.

Le traitement peut être au moins partiellement effectué au fur et à mesure de l'acquisition des données.

Des données comportant une position, dans le référentiel utilisé par la machine d'abrasion au moment de la mesure, et une couleur sont attribuées à différentes zones élémentaires de manière à former une cartographie constituée de zones élémentaires 2, rectangulaires dans cet exemple, colorées, comme visible sur la figure 4. Dans cet exemple, comme visible sur la cartographie issue du traitement de l'acquisition, chaque zone élémentaire 2 est représentée par un rectangle de couleur.

Lors de l'étape de traitement, on détermine, pour chaque point X, par exemple chaque point X de la trajectoire initiale d'abrasion, une surface S₁ autour de ce point X correspondant à la surface couverte par le plateau abrasif de la machine d'abrasion. Cette surface S₁ est visible sur la figure 4 et correspond à celle qui est couverte par un ensemble 3 de zones élémentaires 2. L'ensemble 3 de zones élémentaires 2 formant la surface S₁ présente une surface circulaire dans cet exemple, et les zones élémentaires 2 le formant sont rectangulaires, de telle sorte qu'un traitement est effectué pour déterminer les zones élémentaires 2 qu'on prend en compte pour le calcul ou la détermination de la valeur à attribuer à l'ensemble 5.

Dans l'exemple considéré, on détermine la valeur de chaque ensemble 3 de zones élémentaires à partir d'au moins une valeur d'une des zones élémentaires de cet ensemble.

Par exemple, on peut commencer par comparer les valeurs des zones élémentaires de l'ensemble 3 avec une valeur seuil qui peut être la couleur finale bronze. Si l'une des zones élémentaires comporte la valeur seuil, alors, on peut attribuer cette valeur seuil à l'ensemble 3, de telle sorte que la trajectoire d'abrasion évitera la surface S₁ de cet ensemble. Si aucune des valeurs des zones élémentaires de l'ensemble 3 n'atteint la valeur seuil, alors on peut faire une moyenne des valeurs des zones élémentaires de l'ensemble 3 pour trouver la valeur de l'ensemble 3. La moyenne peut être pondérée. Un autre critère peut être défini pour déterminer la valeur de l'ensemble.

La valeur des zones élémentaires 2 et/ou des ensembles 3 permet donc de définir une trajectoire d'abrasion à l'étape (c), ou de l'ajuster, par exemple à partir d'une trajectoire d'abrasion initiale ou précédente, par exemple pour éviter certaines zones élémentaires ou ensembles de zones. La valeur des zones élémentaires 2 et/ou des ensembles 3 permet également de définir ou ajuster, toujours à l'étape (c) du procédé, un ou plusieurs paramètres de la machine d'abrasion tels que la vitesse d'avance du plateau abrasif, sa vitesse de rotation, l'effort appliqué par la machine lors de l'abrasion de la surface, le changement de disque abrasif du plateau abrasif, le grain d'abrasion du disque abrasif, le diamètre du plateau abrasif ou autre paramètre d'abrasion.

Une fois le ou les paramètres et/ou la trajectoire d'abrasion déterminés et/ou ajustés, on peut les appliquer à la machine d'abrasion, pour effectuer l'abrasion, comme illustré sur la figure 5. Dans cet exemple, la machine permettant l'acquisition de données et la machine d'abrasion effectuant l'abrasion sont confondues en un seul robot ou bras robotisé portant d'une part l'outil d'acquisition, notamment le capteur, et d'autre part le plateau abrasif.

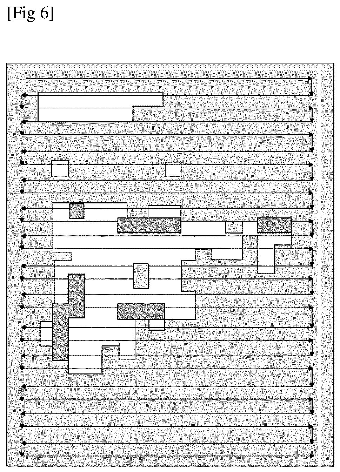

On a illustré sur la figure 6, une image de la surface S cartographiée, représentée avec les valeurs de zones élémentaires ou d'ensembles de zones élémentaires attribuées correspondant à des couleurs, blanches, grisées ou sombres.

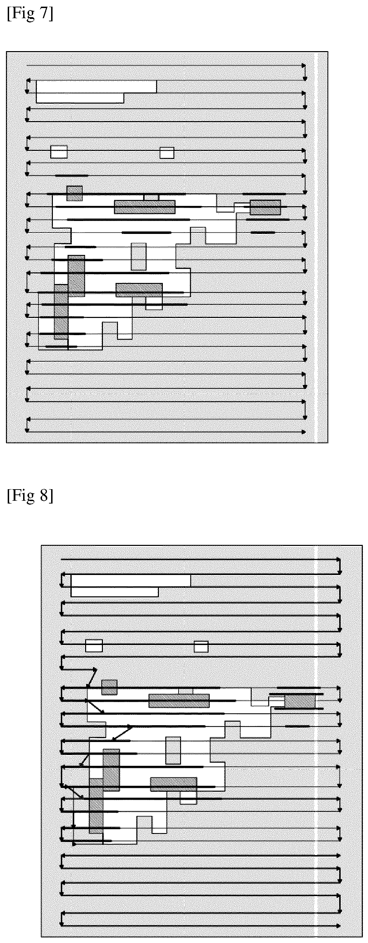

Sur la figure 7, l'image de la surface S comporte des zones ou ensembles barrés, correspondant aux zones ou ensembles à éviter lors de l'abrasion.

La figure 8 illustre la trajectoire d'abrasion qui est ajustée et tracée pour la prochaine abrasion, afin d'éviter lesdites zones ou ensembles, dont on visualise les valeurs, consistant en des couleurs, attribuées. Entre chaque tronçon de trajectoire, la machine d'abrasion devra se dégager, se déplacer vers un point d'approche puis commencer à poncer la zone suivante.

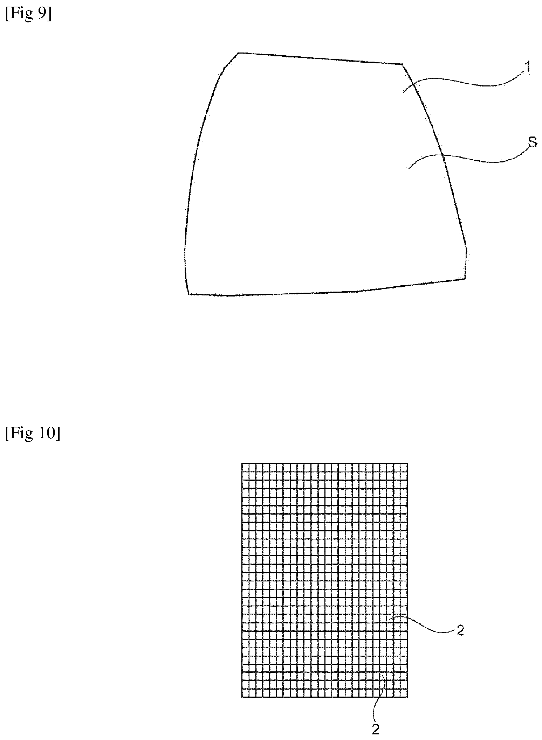

On a représenté sur la figure 9 une pièce de couleur uniforme, à traiter par ponçage, de forme rectangulaire, incurvée autour d'au moins un axe, visible en perspective. La cartographie associée de la surface S avec des zones élémentaires 2 carrées dans cet exemple, de couleur uniforme avant ponçage est représentée sur la figure 10.

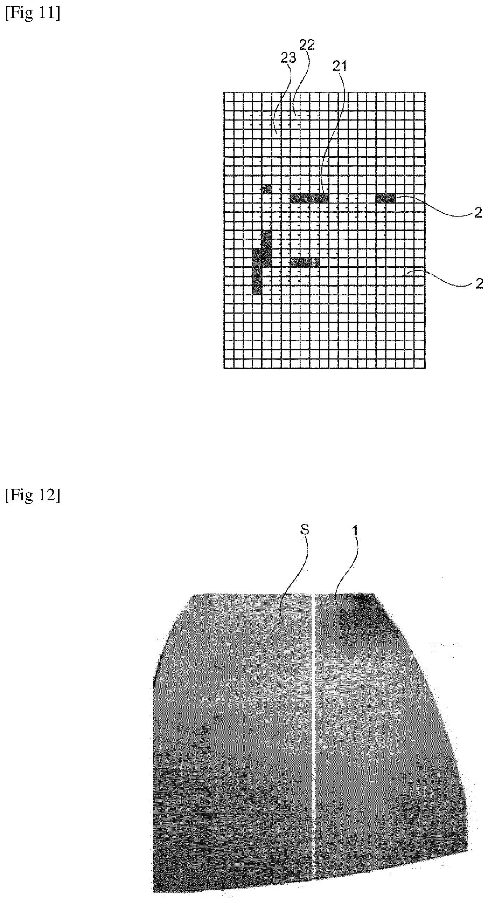

Après mise en œuvre de l'ensemble des étapes du procédé selon l'invention, au moins une fois, voire deux ou trois fois ou plus, avec des paramètres de vitesse d'avance minimale, par exemple, sauf dans les demi-tours où elle est plus rapide, on constate que la couleur de la surface S de la pièce 1 n'est plus uniforme, comme visible sur la figure 12. La cartographie associée visible sur la figure 11 montre des zones 21 de couleur plus sombre que d'autres, des zones 22 de couleur intermédiaire et des zones 23 de couleur initiale. Des taches sombres sur des zones 23 sont détectées par le capteur, il y a donc des zones à éviter lors de la prochaine abrasion. C'est sur la base de cet état de surface illustré sur la figure 12 et cartographié sur la figure 11 qu'ont été tirées les images des figures 6, 7 et 8 correspondant, successivement, à la mise en œuvre de l'étape (c) de détermination et/ou d'ajustement des paramètres et trajectoire d'abrasion. Dans les zones 22 de couleur intermédiaire, on pourra modifier les paramètres pour accélérer par exemple la vitesse d'avance afin de moins poncer ces zones.

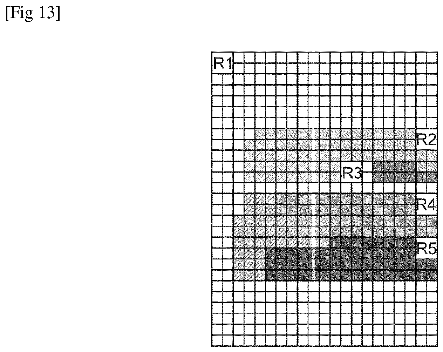

Les paramètres et la trajectoire pour la prochaine abrasion sont déterminés et illustrés sur la figure 13. Après une optimisation de l'algorithme de reconstruction de trajectoire, plusieurs de ces régions peuvent être fusionnées pour réduire le nombre d'entrées/sorties de la ponceuse, afin de gagner du temps et/ou d'éviter la dégradation de la qualité pouvant être entraîné par les entrées/sorties. Les régions R1, R2, R3, R4 et R5 sur cette figure 13 correspondent à des tronçons de trajectoire d'abrasion distincts.

On arrête le procédé par exemple lorsqu'au moins 80% de la surface S n'est plus à poncer, ayant atteint la valeur seuil, lorsque par exemple 80% de la surface sur la figure 13 est occupée par des zones blanches ou quand on ne peut plus atteindre des zones à abraser, trop petites par rapport à l'outil ou quand on ne peut plus diminuer le pouvoir d'abrasion de la machine d'abrasion.

Il est à noter que dans l'exemple considéré, la surface S de la pièce comporte une portion périphérique à proximité d'au moins un bord de la pièce sur une distance prédéterminée à partir de celui-ci, ladite portion périphérique n'étant pas traitée par la machine d'abrasion.

## Revendications

1. Procédé d'abrasion d'une surface (S) d'une pièce (1) au moyen d'une machine d'abrasion, comportant les étapes suivantes :
(a) acquisition, avec au moins un capteur, sur au moins une partie de la surface de la pièce, de données relatives à au moins une caractéristique de la pièce en au moins deux zones élémentaires (2) définies sur ladite surface,
(b) traitement, pour chaque zone élémentaire (2), des données relatives à ladite au moins une caractéristique afin d'attribuer à au moins un ensemble (3) de zones élémentaires (2) une valeur pour cette caractéristique, un ensemble de zones élémentaires étant défini comme comportant une pluralité de zones élémentaires présentes dans un rayon prédéterminé autour d'un point donné de la surface de la pièce, le rayon prédéterminé correspondant à celui d'un plateau abrasif de la machine d'abrasion, dans lequel pour chaque point donné d'une trajectoire d'abrasion initiale, un ensemble de zones élémentaires est défini autour de ce point,
(c) détermination et/ou ajustement d'au moins un paramètre d'abrasion de la machine d'abrasion et/ou d'une trajectoire d'abrasion en fonction des valeurs attribuées pour les ensemble(s) (3) de zones élémentaires (2),
(d) abrasion d'au moins une partie de la surface (S) avec la machine d'abrasion avec ledit au moins un paramètre d'abrasion et ladite trajectoire d'abrasion.

2. Procédé selon la revendication 1, comportant au moins une répétition des étapes (a) à (c) et, de préférence, au moins une répétition de l'étape (d).

3. Procédé selon l'une quelconque des revendications précédentes, comportant plusieurs répétitions des étapes (a) à (d), de préférence au moins deux répétitions, la dernière répétition ne comportant pas l'étape (d).

4. Procédé selon l'une quelconque des revendications précédentes, dans lequel la machine d'abrasion se déplace relativement à la pièce lors de l'étape (d) d'abrasion, la pièce étant alors fixe.

5. Procédé selon l'une quelconque des revendications 1 à 3, dans lequel la pièce et la machine d'abrasion sont mobiles l'une par rapport à l'autre, lors de l'étape (d) d'abrasion.

6. Procédé selon l'une quelconque des revendications 1 à 3, dans lequel la pièce est déplacée relativement à la machine d'abrasion lors de l'étape (d) d'abrasion, la machine d'abrasion étant alors fixe.

7. Procédé selon l'une quelconque des revendications précédentes, dans lequel ladite au moins une caractéristique de la pièce (1) est choisie dans le groupe constitué par une couleur, une dimension, notamment une épaisseur, un état de surface tel qu'une brillance ou une rugosité, une radiation.

8. Procédé selon l'une quelconque des revendications précédentes, dans lequel ledit au moins un capteur est choisi dans le groupe constitué par un capteur avec ou sans contact à partir de technologies optiques, mécaniques, magnétiques, capacitives, acoustiques, de rayonnements et piézo-électriques, notamment le groupe constitué par les caméras, les capteurs de couleurs, les thermocouples.

9. Procédé selon l'une quelconque des revendications précédentes, dans lequel ledit au moins un paramètre d'abrasion est choisi parmi les suivants : vitesse d'avance, vitesse de rotation ou défilement de l'outil abrasif, effort appliqué de l'outil abrasif sur la surface de la pièce, nature, forme et/ou taille de l'outil abrasif, orientation angulaire de l'outil abrasif par rapport à la normale locale de la surface de la pièce.

10. Procédé selon l'une quelconque des revendications précédentes, dans lequel l'étape (c) de détermination comporte une comparaison, pour chaque zone élémentaire (2), de ladite valeur avec une valeur seuil prédéterminée, procédé dans lequel, lorsque, par mise en œuvre de la comparaison, la valeur seuil pour ladite au moins une caractéristique de la pièce (1) est atteinte dans au moins une zone élémentaire (2) d'un ensemble (3) de zones élémentaires, la trajectoire d'abrasion est, de préférence, déterminée de manière à ce qu'il n'y ait plus d'abrasion dans l'ensemble (3) de zones élémentaires concerné.

11. Procédé selon la revendication 10, dans lequel lorsque, par mise en œuvre de la comparaison, la valeur seuil pour ladite au moins une caractéristique de la pièce (1) est atteinte pour au moins un pourcentage prédéfini de la surface (S) ou d'ensemble(s) (3) de zones élémentaires, notamment au moins 80% de la surface, le procédé d'abrasion est stoppé.

12. Procédé selon l'une quelconque des revendications précédentes, l'abrasion consistant en un ponçage.

13. Procédé selon l'une quelconque des revendications précédentes, mettant en œuvre deux capteurs différents pour la réalisation de l'étape (a) d'acquisition.

14. Procédé selon l'une quelconque des revendications précédentes, dans lequel le ou les capteurs comportent un capteur de détection de couleur, et la valeur attribuée à chaque zone élémentaire consiste en une couleur.

## Patentansprüche

1. Verfahren zum Schleifen einer Oberfläche (S) eines Werkstücks (1) mittels einer Schleifmaschine, umfassend die folgenden Schritte:
(a) Erfassen, mit mindestens einem Sensor, auf mindestens einem Teil der Oberfläche des Werkstücks, von Daten bezüglich mindestens eines Merkmals des Werkstücks in mindestens zwei elementaren Zonen (2), die auf der Oberfläche definiert sind;
(b) Verarbeiten, für jede elementare Zone (2), der Daten bezüglich des mindestens einen Merkmals, um mindestens einer Menge (3) von elementaren Zonen (2) einen Wert für dieses Merkmal zuzuweisen, wobei eine Menge von elementaren Zonen definiert ist als eine Mehrzahl von elementaren Zonen umfassend, die in einem vorbestimmten Radius um einen gegebenen Punkt der Oberfläche des Werkstücks vorhanden sind, wobei der vorbestimmte Radius dem einer Schleifplatte der Schleifmaschine entspricht, wobei für jeden gegebenen Punkt einer anfänglichen Schleifbahn eine Menge von elementaren Zonen um diesen Punkt definiert wird,
(c) Bestimmen und/oder Anpassen mindestens eines Schleifparameters der Schleifmaschine und/oder einer Schleifbahn in Abhängigkeit von den für die Menge(n) (3) von elementaren Zonen (2) zugewiesenen Werten,
(d) Schleifen mindestens eines Teils der Oberfläche (S) mit der Schleifmaschine mit dem mindestens einen Schleifparameter und der Schleifbahn.

2. Verfahren nach Anspruch 1, umfassend mindestens eine Wiederholung der Schritte (a) bis (c) und vorzugsweise mindestens eine Wiederholung des Schritts (d).

3. Verfahren nach einem der vorhergehenden Ansprüche, umfassend mehrere Wiederholungen der Schritte (a) bis (d), vorzugsweise mindestens zwei Wiederholungen, wobei die letzte Wiederholung den Schritt (d) nicht umfasst.

4. Verfahren nach einem der vorhergehenden Ansprüche, wobei sich die Schleifmaschine bei dem Schleifschritt (d) relativ zu dem Werkstück bewegt, wobei das Werkstück dann stationär ist.

5. Verfahren nach einem der Ansprüche 1 bis 3, wobei das Werkstück und die Schleifmaschine bei dem Schritt (d) in Bezug aufeinander beweglich sind.

6. Verfahren nach einem der Ansprüche 1 bis 3, **dadurch gekennzeichnet**, wobei das Werkstück bei dem Schleifschritt (d) relativ zu der Schleifmaschine bewegt wird, wobei die Schleifmaschine dann stationär ist.

7. Verfahren nach einem der vorhergehenden Ansprüche, wobei das mindestens eine Merkmal des Werkstücks (1) aus der Gruppe gewählt wird, die aus einer Farbe, einem Maß, insbesondere einer Dicke, einer Oberflächenbeschaffenheit wie einem Glanz oder einer Rauheit, einer Strahlung besteht.

8. Verfahren nach einem der vorhergehenden Ansprüche, wobei der mindestens eine Sensor aus der Gruppe gewählt wird, die aus einem kontaktbehafteten oder kontaktlosen Sensor auf der Basis von optischen, mechanischen, magnetischen, kapazitiven und akustischen, Strahlungs-und piezoelektrischen Technologien besteht, insbesondere der Gruppe, die aus Kameras, Farbsensoren und Thermoelementen besteht.

9. Verfahren nach einem der vorhergehenden Ansprüche, wobei der mindestens eine Schleifparameter unter den folgenden gewählt wird: Vorschubgeschwindigkeit, Rotations- oder Durchlaufgeschwindigkeit des Schleifwerkzeugs, vom Schleifwerkzeug auf die Oberfläche des Werkstücks ausgeübte Kraft, Art, Form und/oder Größe des Schleifwerkzeugs, winklige Ausrichtung des Schleifwerkzeugs in Bezug auf die lokale Normale der Oberfläche des Werkstücks.

10. Verfahren nach einem der vorhergehenden Ansprüche, wobei der Schritt (c) des Bestimmens ein Vergleichen, für jede elementare Zone (2), des Werts mit einem vorbestimmten Schwellenwert umfasst, wobei bei dem Verfahren, wenn durch Durchführen des Vergleichs der Schwellenwert für das mindestens eine Merkmal des Werkstücks (1) in mindestens einer elementare Zone (2) einer Menge (3) von elementaren Zonen erreicht wird, die Schleifbahn, vorzugsweise, so bestimmt wird, dass in der betroffenen Menge (3) von elementaren Zonen nicht mehr geschliffen wird.

11. Verfahren nach Anspruch 10, wobei, wenn durch Durchführen des Vergleichs der Schwellenwert für das mindestens eine Merkmal des Werkstücks (1) für mindestens einen vordefinierten Prozentsatz der Oberfläche (S) oder eine oder mehrere Menge(n) (3) von elementaren Zonen, insbesondere mindestens 80 % der Oberfläche, erreicht wird, das Schleifverfahren gestoppt wird.

12. Verfahren nach einem der vorhergehenden Ansprüche, **dadurch gekennzeichnet, dass** das Schleifen aus einem Glätten besteht.

13. Verfahren nach einem der vorhergehenden Ansprüche, bei dem zwei verschiedene Sensoren zum Ausführen des Schritts (a) des Erfassens eingesetzt werden.

14. Verfahren nach einem der vorhergehenden Ansprüche, wobei der oder die Sensoren einen Farberkennungssensor umfassen und der jeder elementaren Zone zugewiesene Wert aus einer Farbe besteht.

## Claims

1. Method for abrading a surface (S) of a workpiece (1) by means of an abrasion machine, comprising the following steps:
(a) acquisition, with at least one sensor, on at least a part of the surface of the workpiece, of data relating to at least one characteristic of the workpiece in at least two basic zones (2) defined on said surface,
(b) processing, for each basic zone (2), of the data relating to said at least one characteristic in order to assign, to at least one set (3) of basic zones (2), a value for this characteristic, a set of basic zones being defined as comprising a plurality of basic zones present within a predetermined radius around a given point of the surface of the workpiece, the predetermined radius corresponding to that of an abrasive table of the abrasion machine, wherein, for each given point of an initial abrasion trajectory, a set of basic zones is defined around this point,
(c) determination and/or adjustment of at least one abrasion parameter of the abrasion machine and/or of an abrasion trajectory as a function of the values assigned for the set or sets (3) of basic zones (2),
(d) abrasion of at least a part of the surface (S) with the abrasion machine with said at least one abrasion parameter and said abrasion trajectory.

2. Method according to Claim 1, comprising at least one repetition of the steps (a) to (c) and, preferably, at least one repetition of the step (d).

3. Method according to either one of the preceding claims, comprising several repetitions of the steps (a) to (d), preferably at least two repetitions, the last repetition not including the step (d).

4. Method according to any one of the preceding claims, wherein the abrasion machine moves relative to the workpiece during the abrasion step (d), the workpiece then being stationary.

5. Method according to any one of Claims 1 to 3, wherein the workpiece and the abrasion machine are mobile with respect to one another, during the abrasion step (d).

6. Method according to any one of Claims 1 to 3, wherein the workpiece is displaced relative to the abrasion machine during the abrasion step (d), the abrasion machine then being stationary.

7. Method according to any one of the preceding claims, wherein said at least one characteristic of the workpiece (1) is chosen from the group composed of a colour, a dimension, notably a thickness, a surface condition such as a brightness or a roughness, a radiation.

8. Method according to any one of the preceding claims, wherein said at least one sensor is chosen from the group composed of a sensor with or without contact based on optical, mechanical, magnetic, capacitive, acoustic, radiative and piezoelectric technologies, notably the group composed of cameras, colour sensors, thermocouples.

9. Method according to any one of the preceding claims, wherein said at least one abrasion parameter is chosen from among the following: speed of advance, speed of rotation or progress of the abrasive tool, effort applied by the abrasive tool on the surface of the workpiece, nature, form and/or size of the abrasive tool, angular orientation of the abrasive tool with respect to the local normal to the surface of the workpiece.

10. Method according to any one of the preceding claims, wherein the determination step (c) comprises a comparison, for each basic zone (2), of said value with a predetermined threshold value, in which method, when, by implementation of the comparison, the threshold value for said at least one characteristic of the workpiece (1) is reached in at least one basic zone (2) of a set (3) of basic zones, the abrasion trajectory is, preferably, determined so that there is no longer abrasion in the set (3) of basic zones concerned.

11. Method according to Claim 10, wherein, when, by implementation of the comparison, the threshold value for said at least one characteristic of the workpiece (1) is reached for at least a predefined percentage of the surface (S) or set or sets (3) of basic zones, notably at least 80% of the surface, the abrasion method is stopped.

12. Method according to any one of the preceding claims, the abrasion consisting of a buffing.

13. Method according to any one of the preceding claims, implementing two different sensors for the performance of the acquisition step (a).

14. Method according to any one of the preceding claims, wherein the sensor or sensors comprise a colour detection sensor, and the value assigned to each basic zone consists of a colour.
